# EUROPÄISCHE PATENTSCHRIFT

(11) **EP 3 140 530 B1**
(45) Veröffentlichungstag und Bekanntmachung des Hinweises auf die Patenterteilung: **26.06.2019**
(21) Anmeldenummer: 15705988.2
(22) Anmeldetag: 19.02.2015
(51) Int. Cl.: F02B 37/18, F16K 31/04, F01P 3/20

(54) **AGBASTURBOLADER MIT EINEM WASTE-GATE-VENTIL**
TURBOCHARGER WITH A WASTE GATE VALVE
TURBOCOMPRESSEUR À SOUPAPE DE DÉCHARGE

(30) Priorität: 09.05.2014 DE 102014106515
(43) Veröffentlichungstag der Anmeldung: 15.03.2017
(73) Patentinhaber: Pierburg GmbH, 41460 Neuss (DE)
(72) Erfinder: NOWAK, Martin, 51379 Leverkusen (DE); BENRA, Michael-Thomas, 44579 Castrop-Rauxel (DE); NIGRIN, Sven, 40468 Düsseldorf (DE); ZIELBERG, Stephan, 44866 Bochum (DE)
(74) Vertreter: Patentanwälte ter Smitten Eberlein-Van Hoof Rütten Partnerschaftsgesellschaft mbB
(86) Internationale Anmeldenummer: PCT/EP2015/053499
(87) Internationale Veröffentlichungsnummer: WO 2015/169461

(56) Entgegenhaltungen:
- WO-A1-2012/089459
- WO-A2-2010/009945
- DE-A1-102008 004 688
- DE-A1-102010 025 207
- DE-T5-112011 100 249
- JP-A- 2012 241 619
- US-A1- 2007 199 318

## Beschreibung

Die Erfindung betrifft einen Abgasturbolader mit einem Waste-Gate-Ventil, einem Verdichter und einer Turbine, einem Turbinengehäuse, einem Bypasskanal zur Umgehung der Turbine, einem Bypasskanalabschnitt, der im Turbinengehäuse ausgebildet ist, einem Aktorgehäuse, einem Elektromotor, der im Aktorgehäuse angeordnet ist, einem Getriebe, das im Aktorgehäuse angeordnet ist, einer Abtriebswelle des Getriebes, einem Regelkörper, der mit der Abtriebswelle gekoppelt ist und einen Öffnungsquerschnitt des Bypasskanals beherrscht.

Derartige Abgasturbolader mit Waste-Gate-Ventilen sind bekannt. Der Turbolader dient zur Erhöhung des Ladedrucks und damit zur Leistungssteigerung des Verbrennungsmotors. Der zu erzeugende Druck ist dabei aufgrund der Kopplung des Turbinenrades mit dem Verdichterrad immer abhängig von der geförderten Abgasmenge, In bestimmten Betriebszuständen ist es daher erforderlich, die auf den Verdichter wirkende Antriebsenergie zu verringern beziehungsweise zu regeln.

Hierzu werden unter anderem Waste-Gate-Ventile eingesetzt, welche in einem Bypasskanal angeordnet sind, über den die Turbine umgehbar ist, so dass nicht mehr die vollständige Strömungsmenge des Abgases auf das Turbinenrad wirkt. Diese Waste-Gate-Ventile sind zumeist als Klappenventile ausgebildet, die über einen pneumatischen Aktor betätigt werden, der ein mit der Klappe gekoppeltes Gestänge antreibt.

Da eine hohe thermische Belastung aufgrund des heißen Abgases im Bereich des Turbinengehäuses vorliegt, wurden diese pneumatischen Aktoren zur Verringerung der thermischen Belastung im Bereich des Verdichters, und insbesondere beabstandet zum Turbinengehäuse angeordnet.

Eine exakte Regelung der über den Bypasskanal abgeführten Abgasmenge ist jedoch mit einem pneumatischen Aktor schwierig. Aus diesem Grund sind in den letzten Jahren zunehmend auch Elektromotoren als Antrieb für Waste-Gate-Ventile verwendet worden. Diese wurden üblicherweise zur Verringerung der thermischen Belastung ebenfalls beabstandet zum Turbinengehäuse angeordnet, so dass weiterhin Gestänge zur Kopplung mit der Klappe verwendet wurden.

Aufgrund des stetig sinkenden, zur Verfügung stehenden Bauraums Ist es jedoch wünschenswert, die Aktoren der Waste-Gate-Ventile in unmittelbarer Nähe zum Ventil selbst anzuordnen, da dies den zu verwendenden Bauraum reduziert und eine genauere Regelung ermöglicht. Auch entstehen bei der Verwendung von Gestängen häufig ein erhöhter Verschleiß der Mechanik, insbesondere durch hohe auftretende Querkräfte im Bereich der Klappenlagerung sowie ein erhöhter Aufwand bei der Montage.

Aus diesem Grund wird in der WO 2012/089459 A1 ein Abgasturbolader mit einem wassergekühlten Turbinengehäuse und integriertem elektrischen Waste-Gate-Ventil vorgeschlagen. Das Gehäuse, in dem der Elektromotor zum Antrieb des Waste-Gate-Ventils sowie das Getriebe angeordnet sind, ist Teil des Turbinengehäuses, in dem entsprechende Kühlkanäle zur Wasserführung ausgebildet sind. Der Elektromotor und das Getriebe werden somit am Turbinengehäuse montiert, wobei die hierfür erforderliche Öffnung am Turbinengehäuse durch einen Deckel verschlossen wird. Die Lagerung des Ventils ist ebenfalls im Turbinengehäuse angeordnet.

Bei der Verwendung der vorgeschlagenen Anordnung des Waste-Gate-Ventils besteht weiterhin die Gefahr einer thermischen Überlastung des Stellers, da das Kühlmittel beim Durchströmen des Turbinengehäuses stark aufgewärmt wird und nicht direkt am Aktor wirkt. Zusätzlich ist der Aktor einer direkten Wärmestrahlung von außen ausgesetzt, so dass bei ungünstigen Bedingungen weiterhin die Gefahr einer Überhitzung besteht. Insbesondere die Anordnung des Elektromotors direkt im Turbinengehäuse führt in der Regel zu einer thermischen Überlastung. Trotz der Integration des Aktors in das Turbinengehäuse wird in Axialrichtung der Abtriebswelle ein relativ großer Bauraum benötigt.

Zusätzlich ist aus der DE 10 2010 025 207 A1 ein Abgasklappenantrieb bekannt, bei dem ein Schneckengetriebe verwendet wird. Dies hat den Vorteil, dass eine relativ geringe axiale Bauhöhe benötigt wird. Des Weiteren liegt eine Selbsthemmung des Getriebes vor, so dass für ein Halten der Klappe in einer vorbestimmten Stellung bei gleichzeitiger Verwendung einer Rückdrehfeder weniger Energie durch den Elektromotor auf die Welle eingebracht werden muss, um die Stellung zu halten. Allerdings eignet sich dieser Antrieb nicht zur Verwendung als Antrieb von Waste-Gate-Ventilen aufgrund der hohen thermischen Belastung.

Auch die DE 10 2008 004 688 A1 offenbart einen Aktor zur Betätigung eines Ventils in einem Turbolader, welcher am Verdichter befestigt ist und einen Schneckentrieb aufweist.

Des Weiteren ist aus der US 2007/0199318 A1 ein elektromotorischer Aktor bekannt, der beabstandet zur Turbine angeordnet ist und eine Kühlfläche aufweist, welche von gekühlter Ladeluft durchströmt wird, um die thermische Belastung zu verringern.

Zusätzlich ist aus der DE 11 2011 100 249 A1 ein Aktor für eine variable Turbinengeometrie bekannt, der am Turbinengehäuse über einen Halter befestigt ist.

Es stellt sich daher die Aufgabe, einen Abgasturbolader mit einem Waste-Gate-Ventil zu schaffen, bei dem eine thermische Überlastung des Antriebs des Aktors zuverlässig verhindert wird. Zusätzlich soll das Waste-Gate-Ventil leicht zu montieren sein und einen möglichst geringen Bauraum aufweisen. Des Weiteren ist eine möglichst exakte Regelbarkeit erwünscht.

Diese Aufgabe wird durch einen Abgasturbolader mit einem Waste-Gate-Ventil mit den Merkmalen des Hauptanspruchs 1 gelöst.

Dadurch, dass das Aktorgehäuse lösbar am Turbinengehäuse befestigt ist und einen separaten Kühlmittelkanal aufweist, wobei das Getriebe ein Schraubenradgetriebe ist, besteht eine getrennte Kühlmittelversorgung des Aktors, so dass diese abhängig von der im Aktorgehäuse tatsächlich vorhandenen Temperatur und unabhängig von der Temperatur im Turbinengehäuse erfolgen kann. Die Wirkung der Wärmestrahlung von der Turbine wird deutlich verringert, da das Aktorgehäuse direkt gekühlt wird. Es wird eine thermische Trennung vom Turbinengehäuse geschaffen, die den Wärmeübergang in das Aktorgehäuse deutlich verringert. Trotzdem besteht der Vorteil eines direkten Klappenantriebs, durch den eine sehr genaue Regelung des Waste-Gate-Ventils möglich wird. Die Herstellung und Montage des Aktors ist trotz der Ausführung des Kühlmittelkanals im Aktorgehäuse sehr einfach, da wenige Bauteile verwendet werden müssen. Der verwendete Bauraum in Achsrichtung der Abtriebswelle wird deutlich verringert. So kann der Elektromotor mit gewissem Abstand zum Turbinengehäuse und der daraus folgenden verringerten Wärmebelastung angeordnet werden, ohne dass die axiale Bauraumhöhe vergrößert wird.

Vorzugsweise erstreckt sich die Mittelachse der Antriebswelle des Elektromotors im Wesentlichen senkrecht zur Abtriebswelle, so dass eine minimale Bauhöhe in Richtung der Abtriebswelle erreicht wird. Zusätzlich besteht eine gute Erreichbarkeit des Aktors und seiner Einzelteile auch im eingebauten Zustand.

In einer vorteilhaften Ausgestaltung umgibt ein erster Kühlmittelkanalabschnitt das Getriebe umfänglich und ist durch einen Aktordeckel axial verschlossen. Entsprechend können hohe Wärmemengen aus dem Aktor abgeführt werden. Der Lagerbereich der Abtriebswelle wird gut gekühlt, so dass die Lebensdauer der Lager erhöht wird. Auch ein Wärmeeintrag von außen durch Wärmestrahlung wird zuverlässig verhindert.

Um eine besonders gute Kühlung des thermisch empfindlichen Elektromotors zu erhalten und entsprechend ausreichend Wärme abführen zu können, umgibt ein zweiter Kühlmittelkanalabschnitt den Elektromotor über dessen gesamte axiale Höhe zumindest teilweise radial und ist durch einen Motordeckel verschlossen. So kann einerseits die Wärme des Elektromotors nach außen geführt werden und andererseits besteht eine thermische Trennung zur gegebenenfalls heißen Umgebung des Aktors. Eine thermische Überlastung kann so zuverlässig verhindert werden. Der Kühlmittelkanal kann einfach und kostengünstig durch einen Schieber im Druckgussverfahren erzeugt werden, so dass keine verlierbaren Kerne verwendet werden müssen. Dies reduziert die Herstellkosten.

Vorzugsweise sind der erste Kühlmittelkanalabschnitt und der zweite Kühlmittelkanalabschnitt über zwei Durchtrittsfenster miteinander verbunden. Es besteht eine gemeinsame Durchströmung der beiden Kühlmittelkanalabschnitte, so dass auf zusätzliche Leitungen verzichtet werden kann, wodurch die Montage vereinfacht wird und der verwendete Bauraum verringert wird.

Im ersten Kühlmittelkanalabschnitt ist vorteilhafterweise eine Trennwand ausgebildet, die zwischen den beiden Durchtrittsfenstern zum zweiten Kühlmittelkanalabschnitt angeordnet ist. Auf diese Weise wird eine Zwangsumströmung des Getriebes und damit des Lagers der Abtriebswelle erzeugt.

Vorzugsweise sind am Aktorgehäuse in einem Aufnahmebereich des Elektromotors ein Kühlmitteleinlassstutzen und ein Kühlmittelauslassstutzen ausgebildet. Über diese kann ein unabhängiger Kühlkreis für den Waste-Gate-Aktor angeschlossen werden, so dass eine exakte Temperatursteuerung möglich ist.

In einer weiterführenden Ausgestaltung der Erfindung ist zwischen dem Kühlmitteleinlassstutzen und dem Kühlmittelauslassstutzen eine Trennwand im zweiten Kühlmittelkanalabschnitt angeordnet, die sich in Axialrichtung der Antriebswelle des Elektromotors erstreckt. Auf diese Weise wird eine Kurzschlussströmung vom Einlassstutzen zum Auslassstutzen verhindert. Stattdessen wird eine Zwangsströmung um das gesamte Getriebe und den Elektromotor und somit eine vollumfängliche Kühlung erzeugt.

Vorzugsweise sind am Aktordeckel Elektronikbauteile des Waste-Gate-Ventils angeordnet, so dass zusätzliche zu montierende Bauteile, welche die Elektronik aufnehmen, entfallen. Dies erleichtert die Montage zusätzlich.

Des Weiteren ist es vorteilhaft, wenn am Aktordeckel ein Stecker und ein berührungsloser Sensor zur Lagerückmeldung befestigt sind, wobei der Sensor mit einem Magneten korrespondiert, der mit der Abtriebswelle verbunden ist. Eine sonst notwendige Abdichtung einer Steckerdurchführung entfällt. Der Aktordeckel kann einstückig mit den notwendigen Leitungen durch Spritzgießen hergestellt werden. Somit entfallen Montageschritte, die sonst für die Montage der Elektronik im Gehäuse notwendig wären. Die Befestigung des Magneten erfolgt entweder direkt an der Abtriebswelle oder indirekt an einem mit der Abtriebswelle drehfest verbundenem Bauteil wie dem Abtriebszahnrad. Entsprechend wird eine Lagedetektion an der Abtriebswelle selbst durchgeführt, so dass Fehler durch Ungenauigkeiten am Getriebe ausgeschlossen werden.

Eine weitere Vereinfachung ergibt sich, wenn am Aktordeckel die Anschlusskontakte für den Elektromotor ausgebildet sind, so dass beim Aufsetzen des Deckels automatisch die elektrische Kontaktierung des Elektromotors erfolgt. Entsprechend können alle stromführenden Leitungen am Deckel ausgebildet beziehungsweise in diesem eingespritzt ausgebildet sein. So ergibt sich eine Vereinfachung der Montage und der Herstellung des Aktors.

Die Abtriebswelle ist insbesondere über eine Oldham-Kupplung mit einer Klappenwelle verbunden, an der der Regelkörper befestigt ist, wodurch eine gute Regelbarkeit bei gleichzeitiger thermischer Trennung oder Isolierung zur Verringerung der über die Welle in den Aktor transportierten Wärme erreicht wird. Zusätzlich kann diese Kupplung aus einem schlecht Wärme leitenden Material wie Keramik hergestellt werden. Auch dient diese Kupplung als Toleranzausgleichselement zwischen der Klappenwelle und der Abtriebswelle.

Es wird somit ein Abgasturbolader mit einem Waste-Gate-Ventil geschaffen, welches zuverlässig vor thermischer Überlastung geschützt ist und vormontiert am Turbolader angebracht werden kann, so dass die Montage erleichtert wird, wobei eine sehr genaue Regelung des Waste-Gate-Ventils möglich ist. Die Kühlung kann dabei getrennt an die Bedürfnisse der Turbine und des Ventils angepasst werden. Der benötigte Bauraum ist im Vergleich zu bekannten Ausführungen deutlich verringert.

Ein Ausführungsbeispiel eines erfindungsgemäßen Abgasturboladers mit einem Waste-Gate-Ventil ist In den Figuren dargestellt und wird nachfolgend beschrieben.
Figur 1 zeigt eine Seitenansicht eines erfindungsgemäßen Abgasturboladers mit Waste-Gate-Ventil in perspektivischer Darstellung.
Figur 2 zeigt eine perspektivische Seitenansicht eines Aktorgehäuses des Waste-Gate-Ventils aus Figur 1 in gesprengter Darstellung,
Figur 3 zeigt eine Seitenansicht des Aktorgehäuses des Waste-Gate-Ventils aus Figur 1 in geschnittener Darstellung.

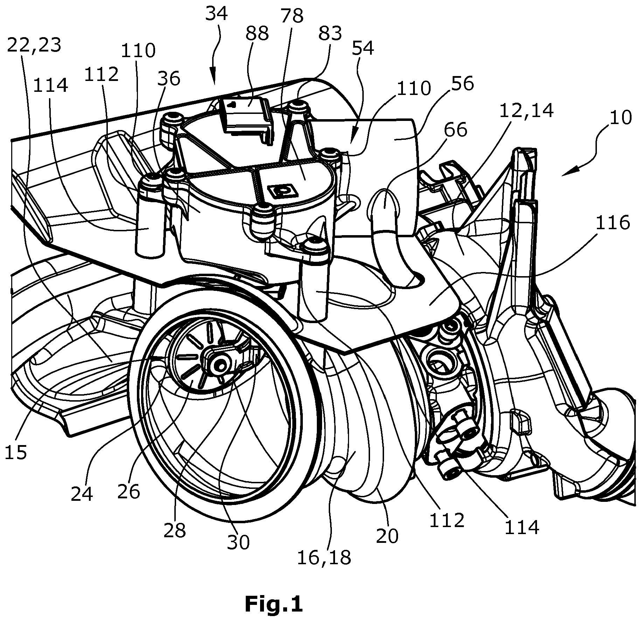

Der in Figur 1 dargestellte Abgasturbolader 10 besteht aus einem Verdichter 12 mit einem Verdichterrad, das in einem Verdichtergehäuse 14 angeordnet ist und einer Turbine 16 mit einem Turbinenrad, das in einem Turbinengehäuse 18 angeordnet ist. Das Turbinenrad ist in bekannter Weise auf einer gemeinsamen Welle mit dem Verdichterrad befestigt, so dass die Bewegung des Turbinenrades durch eine Abgasströmung im Turbinengehäuse 18 über die Welle auf das Verdichterrad übertragen wird, wodurch im Verdichtergehäuse 14 ein Luftstrom komprimiert wird.

Im Turbinengehäuse 18 zweigt stromaufwärts des das Turbinenrad umgebenden Spiralkanals 20 ein Bypasskanal 22 ab. Dieser Bypasskanal 22 mündet hinter dem Spiralkanal 20 in den folgenden Abgaskanal des Verbrennungsmotors.

In einem Bypasskanalabschnitt 23, der im Turbinengehäuse 18 ausgebildet ist, befindet sich ein Ventilsitz 24, der einen Öffnungsquerschnitt des Bypasskanals 22 umgibt. Der Öffnungsquerschnitt ist mittels eines Regelkörpers 26 in Form einer Klappe regelbar, welche zum Verschluss des Öffnungsquerschnitts auf den Ventilsitz 24 aufgelegt werden kann und zur Öffnung des Durchströmungsquerschnitts des Bypasskanals 22 von diesem abgehoben werden kann.

Hierzu ist der Regelkörper 26 an einem Hebel 28 befestigt, der sich von einer Klappenwelle 30 aus erstreckt und einstückig mit dieser hergestellt ist. Die Klappenwelle 30 weist eine gleiche Drehachse auf, wie eine Abtriebswelle 32 eines Aktors 34, über den der Regelkörper 26 betätigt wird. Hierzu ragt die Abtriebswelle 32 aus einem Aktorgehäuse 36 in Richtung des Turbinengehäuses 18 und wird mittels einer Oldham-Kupplung 38 mit der Klappenwelle 30 drehfest verbunden, wobei auch andere Kupplungen denkbar sind.

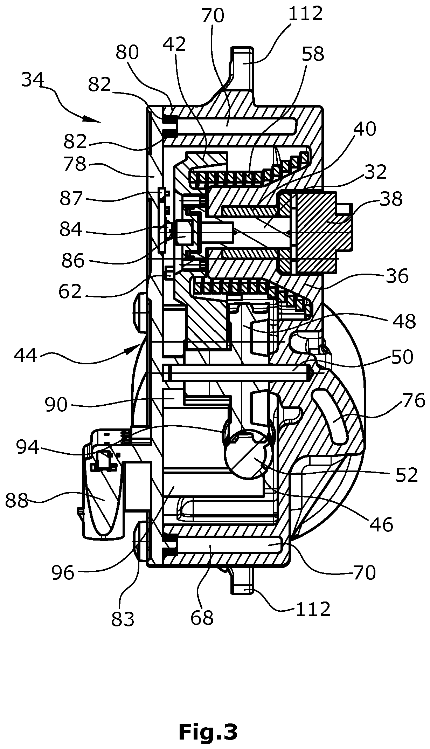

Die Abtriebswelle 32 ist, wie insbesondere in Figur 3 zu erkennen ist, über ein Lager 40 im Aktorgehäuse 36 gelagert, welches als einstückiges Druckgussteil hergestellt ist. Auf der Abtriebswelle 32 ist ein als Zahnradsegment ausgebildetes Abtriebszahnrad 42 eines Getriebes 44 angeordnet, welches im Innern des Aktorgehäuses 36 angeordnet ist und erfindungsgemäß als Schraubenradgetriebe ausgebildet ist. Es besteht aus einem als Antriebsrad dienenden Schraubenrad 46, welches mit dem größeren Zahnrad eines Doppelzahnrades 48 kämmt, dessen kleineres Zahnrad wiederum mit dem Abtriebszahnrad 42 kämmt. Das Doppelzahnrad 48 ist auf einer im Aktorgehäuse 36 befestigten Achse 50 gelagert.

Das Schraubenrad 46 ist auf einer Antriebswelle 52 eines als Antrieb dienenden Elektromotors 54 angeordnet. Der Elektromotor 54 ist in einem Aufnahmebereich 56 des Aktorgehäuses 36 angeordnet, der sich senkrecht zur Abtriebswelle 32 erstreckt.

Im Aktorgehäuse 36 ist zusätzlich noch eine Rückstellfeder 58 angeordnet, die die Abtriebswelle 32 umgibt und deren einer Endschenkel 60 gegen einen Anschlag im Aktorgehäuse 36 anliegt und deren anderer Endschenkel 62 in das Zahnrad 42 greift, so dass die Abtriebswelle 32 und damit der Regelkörper 26 bei Ausfall des Elektromotors 54 oder sonstiger Fehlfunktionen in eine faiol-safe-Stellung gedreht wird, um Schäden am Abgasturbolader 10 durch Überschreiten der maximal zulässigen Drehzahl zu verhindern.

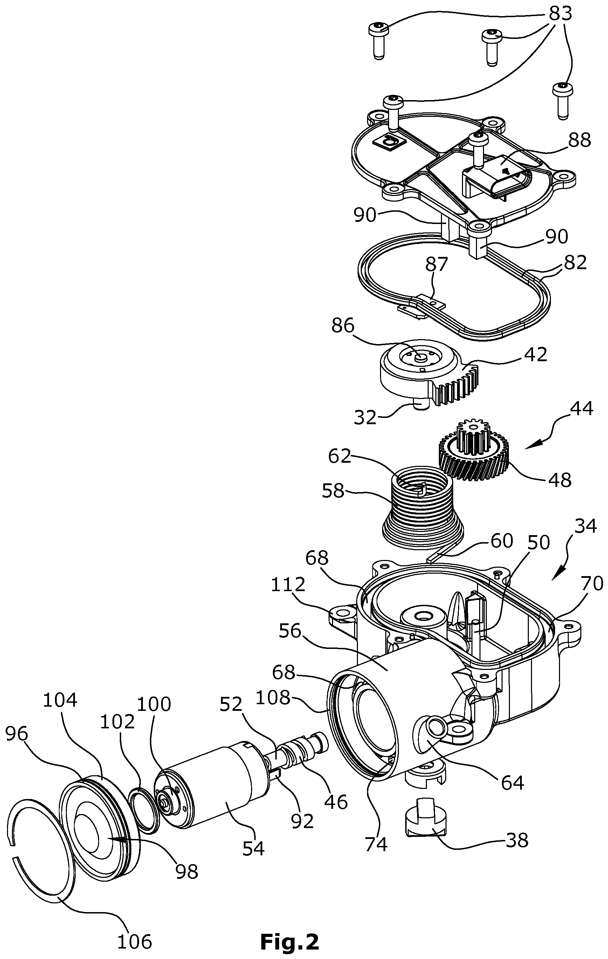

Am Aktorgehäuse 36 sind am Aufnahmebereich 56 des Elektromotors 54 ein Kühlmitteleinlassstutzen 64 und ein Kühlmittelauslassstutzen 66 ausgebildet, die mit einem im Aktorgehäuse 36 ausgebildeten Kühlmittelkanal 68 verbunden sind. Wie in Figur 2 zu erkennen ist, besteht dieser Kühlmittelkanal 68 aus einem ersten Kühlmittelkanalabschnitt 70, der das Getriebe 44 umgibt sowie einem zweiten Kühlmittelkanalabschnitt 72, der den Elektromotor 54 mit Ausnahme einer Trennwand 74, die in axialer Richtung bezüglich der Antriebswelle 52 zwischen dem Kühlmitteleinlassstutzen 64 und dem Kühlmittelauslassstutzen 66 ausgebildet ist, vollumfänglich umgibt. Die Trennwand 74 erstreckt sich über die gesamte axiale Höhe des Elektromotors 54, so dass das Kühlmittel über ein Durchtrittsfenster 76 in den ersten Kühlmittelkanalabschnitt 70 zwangsweise einströmt. Im zweiten Kühlmittelkanalabschnitt 72 ist ebenfalls eine Trennwand ausgebildet, die in den Figuren nicht erkennbar ist und welche sich über die axiale Höhe bezüglich der Abtriebswelle 32 des zweiten Kühlmittelkanalabschnitts erstreckt. Diese Trennwand befindet sich in dem Bereich des das Getriebe 44 umgebenden Aktorgehäuses 36, der an den Aufnahmebereich 56 des Elektromotors 54 grenzt, wodurch das Kühlmittel gezwungen ist, das Getriebe 44 zu umströmen. Nach dieser Umströmung des Getriebes 44 strömt das Kühlmittel wieder über ein ebenfalls nicht zu erkennendes zweites Durchtrittsfenster in den zweiten Kühlmittelkanalabschnitt 72, der den Elektromotor 54 umgibt, jedoch an der anderen Seite der Trennwand 74 in Richtung zum Kühlmittelauslassstutzen 66.

Der erste Kühlmittelkanalabschnitt 70 wird ebenso wie das Innere des Aktorgehäuses 36 durch einen Aktordeckel 78 verschlossen. Dieser Aktordeckel 78 wird Insbesondere durch Kunststoffspritzgießen hergestellt. Zum dichten Verschluss des Kühlmittelkanals 68 ist an der zum Aktorgehäuse 36 weisenden Seite ein umlaufender Vorsprung 80 am Aktordeckel 78 ausgebildet, welcher zur Form des Kühlmitte|kanalabschnitts 70 korrespondiert sowie dessen Breite aufweist, so dass dieser Vorsprung 80 in die als Kühlmittelkanalabschnitt 70 dienende Ausnehmung des Aktorgehäuses 36 ragt. An seinen im Querschnitt gegenüberliegenden Seiten ist jeweils eine mit dem Vorsprung umlaufende Dichtung 82 ausgebildet, über die ein dichter Verschluss des Kühlmittelkanalabschnitts 70 sichergestellt wird.

Neben dem Verschluss des Aktorgehäuses 36 dient dieser Aktordeckel 78, der über Schrauben 83 am Aktorgehäuse 36 befestigt wird, auch als Träger von elektrischen Bauteilen des Aktors 34. Entsprechend ist am Aktordeckel 78 an seiner Ins Innere des Aktors 34 weisenden Seite ein Hallsensor 84 zur Lagerückmeldung angeordnet, der mit einem auf dem Ende der Abtriebswelle 32 angeordneten Magneten 86 kommuniziert. Auch eine Platine 87, die Steuerelemente des Aktors 34 enthalten kann und auf der der Hall Sensor 84 angeordnet ist, ist an dieser Seite des Aktordeckels 78 befestigt. Diese Platine 87 sowie der Hallsensor 84 sind über im Aktordeckel 78 eingespritzte, nicht sichtbare Leitungen mit einem Stecker 88 verbunden, der einstückig mit dem Aktordeckel 78 hergestellt ist und sich nach außen erstreckt. Zusätzlich erstrecken sich auf der zum Stecker 88 gegenüberliegenden Seite des Aktordeckels 78 zwei Vorsprünge 90 in Richtung des Elektromotors 54, in denen Anschlusskontakte ausgebildet sind, über die Kontaktfahnen 92 des Elektromotors 54 zur Stromversorgung des Elektromotors 54 kontaktiert werden.

Wie aus Figur 2 zu erkennen ist, wird der Elektromotor 54 senkrecht zur Achse der Abtriebswelle 32 von außen in den Aufnahmebereich 56 gegen einen Anschlag des Aktorgehäuses 36 geschoben. Dieser Anschlag weist in bekannter Weise eine Öffnung zur Aufnahme eines A-Lagers 94 des Elektromotors 54 auf, durch die das Schraubenrad 46 in den vom ersten Kühlmittelkanalabschnitt 70 umgebenen Bereich des Aktorgehäuses 36 ragt. Des Weiteren sind im Bereich des Anschlags zwei Öffnungen ausgebildet, durch die die Kontaktfahnen 92 des Elektromotors 54 in die Vorsprünge 90 des Aktordeckels 78 ragen.

Der Aufnahmebereich 56 des Elektromotors 54 wird an der zum Aktordeckel 78 axial gegenüberliegenden Seite durch einen Motordeckel 96 verschlossen, der gleichzeitig den zweiten Kühlmittelkanalabschnitt 72 verschließt. Dieser Motordeckel 96 weist eine Ausnehmung 98 zur Aufnahme eines B-Lagers 100 des Elektromotors 54 sowie eine nicht sichtbare umlaufende Axialnut auf, in die eine Wellfeder 102 eingelegt wird, um den Elektromotor 54 axial zu verspannen. Des Weiteren ist am Motordeckel 96 in gleicher Weise wie am Aktordeckel 78 ein umlaufender Vorsprung 104 mit im Querschnitt gegenüberliegenden Dichtringen ausgebildet, der in den Kühlmittekanalabschnitt 72 ragt und diesen nach außen abdichtet. Die Befestigung des Motordeckels 96 erfolgt über einen Klemmring 106, der im zusammengebauten Zustand in einer Radialnut 108 am axialen Ende des Aufnahmebereiches 56 des Aktorgehäuse 36 gehalten wird.

Die Befestigung des Aktors 34 am Turbinengehäuse 18 erfolgt über Schrauben 110, die durch seitlich am Aktorgehäuse 36 ausgebildete Augen 112 gesteckt und in am Turbinengehäuse 18 ausgebildete Dome 114 mit Innengewinde geschraubt werden. Zur zusätzlichen Abschirmung des Aktorgehäuses 36 gegen Wärmestrahlung ist zwischen dem Aktor 34 und dem Turbinengehäuse 18 ein Wärmeableitblech 116 befestigt.

Das beschriebene Waste-Gate-Ventil benötigt lediglich einen geringen Bauraum, insbesondere in axialer Richtung. Zusätzlich verfügt es über einen eigenen Kühlmittelkreislauf, der es ermöglicht, die Temperatur im Gehäuse des Waste-Gate-Ventils separat, also unabhängig vom Turbinengehäuse des Abgasturboladers zu regeln. Der Aktor des Waste-Gate-Ventils kann vormontiert werden und anschließend am Turbinengehäuse befestigt werden, so dass eine direkte Anbindung des Aktors an das Ventil erreicht wird, wodurch eine sehr genaue Regelung möglich wird. Aufgrund der guten thermischen Entkopplung des Aktors vom Turbinengehäuse und daraus folgend der geringen thermischen Belastung des Elektromotors sowie der anderen elektronischen Bausteine wird eine hohe Lebensdauer erreicht. Die Montage wird erheblich erleichtert, da alle elektronischen Bauteile am Aktordeckel ausgebildet sind und somit mit dem Aktordeckel montiert werden, der jedoch gleichzeitig auch den Kühlmittelkanal verschließt. So wird die Anzahl der vorhandenen und zu montierenden Bauteile reduziert.

Es sollte deutlich sein, dass die vorliegende Erfindung nicht auf das Ausführungsbeispiel beschränkt ist, sondern verschiedene Modifikationen innerhalb des Schutzbereichs des Hauptanspruchs möglich sind. Insbesondere ist es möglich, die Deckel anders zu befestigen oder mit Axialdichtungen zu arbeiten. Auch ist es denkbar, eine durchgehende schlecht Wärme leitende Welle zu benutzen.

## Patentansprüche

1. Abgasturbolader (10) mit einem Waste-Gate-Ventil (15),
einem Verdichter (12) und einer Turbine (16),
einem Turbinengehäuse (18),
einem Bypasskanal (22) zur Umgehung der Turbine (16),
einem Bypasskanalabschnitt (23), der im Turbinengehäuse (18) ausgebildet ist,
einem Aktorgehäuse (36),
einem Elektromotor (54), der im Aktorgehäuse (36) angeordnet ist,
einem Getriebe (44), das im Aktorgehäuse (36) angeordnet ist,
einer Abtriebswelle (32) des Getriebes (44),
einem Regelkörper (26), der mit der Abtriebswelle (32) gekoppelt ist und einen Öffnungsquerschnitt des Bypasskanals (22) beherrscht,
**dadurch gekennzeichnet, dass**
das Aktorgehäuse (36) lösbar am Turbinengehäuse (18) befestigt ist und einen separaten Kühlmittelkanal (68) aufweist, wobei das Getriebe (44) ein Schraubenradgetriebe ist.

2. Abgasturbolader mit einem Waste-Gate-Ventil nach Anspruch 1,
**dadurch gekennzeichnet, dass**
sich die Mittelachse der Antriebswelle (52) des Elektromotors (54) im Wesentlichen senkrecht zur Abtriebswelle (32) erstreckt.

3. Abgasturbolader mit einem Waste-Gate-Ventil nach einem der Ansprüche 1 oder 2,
**dadurch gekennzeichnet, dass**
ein erster Kühlmittelkanalabschnitt (70) das Getriebe (44) umfänglich umgibt und durch einen Aktordeckel (78) axial verschlossen ist.

4. Abgasturbolader mit einem Waste-Gate-Ventil nach einem der vorhergehenden Ansprüche,
**dadurch gekennzeichnet, dass**
ein zweiter Kühlmittelkanalabschnitt (72) den Elektromotor (54) über dessen gesamte axiale Höhe zumindest teilweise radial umgibt und durch einen Motordeckel (96) verschlossen ist.

5. Abgasturbolader mit einem Waste-Gate-Ventil nach Anspruch 4,
**dadurch gekennzeichnet, dass**
der erste Kühlmittelkanalabschnitt (70) und der zweite Kühlmittelkanalabschnitt (72) über zwei Durchtrittsfenster (76) miteinander verbunden sind.

6. Abgasturbolader mit einem Waste-Gate-Ventil nach Anspruch 5,
**dadurch gekennzeichnet, dass**
im ersten Kühlmittelkanalabschnitt (70) eine Trennwand ausgebildet ist, die zwischen den beiden Durchtrittsfenstern (76) zum zweiten Kühlmittelkanalabschnitt (72) angeordnet ist.

7. Abgasturbolader mit einem Waste-Gate-Ventil nach Anspruch 6,
**dadurch gekennzeichnet, dass**
am Aktorgehäuse (36) in einem Aufnahmebereich (56) des Elektromotors (54) ein Kühlmitteleinlassstutzen (64) und ein Kühlmittelauslassstutzen (66) ausgebildet sind.

8. Abgasturbolader mit einem Waste-Gate-Ventil nach Anspruch 7,
**dadurch gekennzeichnet, dass**
zwischen dem Kühlmitteleinlassstutzen (64) und dem Kühlmittelauslassstutzen (66) eine Trennwand (74) im zweiten Kühlmittelkanalabschnitt (72) angeordnet ist, die sich in Axialrichtung der Antriebswelle (52) des Elektromotors (54) erstreckt.

9. Abgasturbolader mit einem Waste-Gate-Ventil nach einem der vorhergehenden Ansprüche,
**dadurch gekennzeichnet, dass**
am Aktordeckel (78) Elektronikbauteile (84, 87, 88, 90) des Waste-Gate-Ventils (15) angeordnet sind.

10. Abgasturbolader mit einem Waste-Gate-Ventil nach Anspruch 9,
**dadurch gekennzeichnet, dass**
am Aktordeckel (78) ein Stecker (88) und ein berührungsloser Sensor (84) zur Lagerückmeldung befestigt sind, wobei der Sensor (84) mit einem Magneten (86) korrespondiert, der mit der Abtriebswelle (32) verbunden ist.

11. Abgasturbolader mit einem Waste-Gate-Ventil nach einem der vorhergehenden Ansprüche,
**dadurch gekennzeichnet, dass**
am Aktordeckel (78) die Anschlusskontakte (90) für den Elektromotor (54) ausgebildet sind.

12. Abgasturbolader mit einem Waste-Gate-Ventil nach einem der vorhergehenden Ansprüche,
**dadurch gekennzeichnet, dass**
die Abtriebswelle (32) über eine Oldham-Kupplung (38) mit einer Klappenwelle (30) verbunden ist, an der der Regelkörper (26) befestigt ist.

## Claims

1. Turbocharger (10) with a waste gate valve (15),
a compressor (12) and a turbine (16),
a turbine housing (18),
a bypass channel (22) for bypassing the turbine (16),
a bypass channel portion (23) which is formed in the turbine housing (18),
an actuator housing (36),
an electric motor (54) which is arranged in the actuator housing (36),
a transmission (44) which is arranged in the actuator housing (36),
an output shaft (32) of the transmission (44),
a control body (26) which is coupled to the output shaft (32) and controls an opening cross-section of the bypass channel (22)
**characterized in that**
the actuator housing (36) is removably secured to the turbine housing (18) and has a separate coolant channel (68), said transmission (44) being a helical gear transmission.

2. Turbocharger with a waste gate valve of claim 1, **characterized in that** the centre axis of the input shaft (52) of the electric motor (54) extends substantially vertically with respect to the output shaft (32).

3. Turbocharger with a waste gate valve of one of claims 1 or 2, **characterized in that** first coolant channel section (70) circumferentially surrounds the transmission (44) and is closed axially with an actuator cover (78).

4. Turbocharger with a waste gate valve of one of the preceding claims, **characterized in that** a second coolant channel section (72) encloses the electric motor (54) radially, at least in part, over the entire axial height and is closed with a motor cover (96).

5. Turbocharger with a waste gate valve of claim 4, **characterized in that** the first coolant channel section (70) and the second coolant channel section (72) are connected with each other via two passage openings (76).

6. Turbocharger with a waste gate valve of claim 5, **characterized in that** in the first coolant channel section (70), a partition wall is formed which is arranged between the two passage openings (76) to the second coolant channel section (72).

7. Turbocharger with a waste gate valve of claim 6, **characterized in that** a coolant inlet port (64) and a coolant outlet port (66) are formed on the actuator housing (36) in a receiving portion (56) of the electric motor (54).

8. Turbocharger with a waste gate valve of claim 7, **characterized in that** a partition wall (74) is arranged in the second coolant channel section (72) between the coolant inlet port (64) and the coolant outlet port (66), the partition wall extending in the axial direction of the input shaft (52) of the electric motor (54).

9. Turbocharger with a waste gate valve of one of the preceding claims, **characterized in that** electronic components (84, 87, 88, 89) of the waste gate valve (15) are arranged on the actuator cover (78).

10. Turbocharger with a waste gate valve of claim 9, **characterized in that** a connector (88) and a contactless sensor (84) for position feedback are arranged on the actuator cover (78), the sensor (84) communicating with a magnet (86) connected with the output shaft (32).

11. Turbocharger with a waste gate valve of one of the preceding claims, **characterized in that** the terminals (90) for the electric motor (54) are formed on the actuator cover (78).

12. Turbocharger with a waste gate valve of one of the preceding claims, **characterized in that** the output shaft (32) is connected with a flap shaft (30) via an Oldham coupling (38), the control body (26) being fastened to the flap shaft (30).

## Revendications

1. Turbocompresseur (10) à soupape de décharge (15), avec
un compresseur (12) et une turbine (16),
un boitier de turbine (18),
un canal de contournement (22) pour contourner la turbine (16),
une section (23) du canal de contournement formée dans le boitier de turbine (18),
un boitier d'actionneur (36),
un moteur électrique (34) disposé dans le boitier d'actionneur (36),
un engrenage (44) disposé dans le boitier d'actionneur (36),
un arbre de sortie (32) dudit engrenage (44),
un corps de réglage (26) couplé avec l'arbre de sortie (32) et gouvernant une section transversale d'ouverture dudit canal de contournement (22),
**caractérisé en ce que**
le boitier d'actionneur (36) est monté de manière amovible sur le boitier de turbine (18) et comprend un canal de liquide de refroidissement (68) séparé, ledit engrenage (44) étant un engrenage hélicoïdal.

2. Turbocompresseur à soupape de décharge selon la revendication 1, **caractérisé en ce que** l'axe central de l'arbre d'entrainement (52) dudit moteur électrique (54) s'étend sensiblement verticalement par rapport à l'arbre de sortie (32).

3. Turbocompresseur à soupape de décharge selon la revendication 1 ou 2, **caractérisé en ce qu'**une première section (70) du canal de liquide de refroidissement entoure l'engrenage selon la circonférence et est fermée axialement par un couvercle (78) de l'actionneur.

4. Turbocompresseur à soupape de décharge selon l'une quelconque des revendications précédentes, **caractérisé en ce qu'**une deuxième section (72) du canal de liquide de refroidissement entoure radialement, au moins en partie, le moteur électrique (54) sur tout son hauteur axial et est fermé par un couvercle (96) du moteur.

5. Turbocompresseur à soupape de décharge selon la revendication 4, **caractérisé en ce que** la première section (70) du canal de liquide de refroidissement et la deuxième section (72) du canal de liquide de refroidissement sont liées par deux ouvertures de passage (76).

6. Turbocompresseur à soupape de décharge selon la revendication 5, **caractérisé en ce qu'**une paroi de séparation est formée dans la première section (70) du canal de liquide de refroidissement, la paroi étant disposée entre les deux ouvertures de passage (76) vers la deuxième section (72) du canal de liquide de refroidissement sont liées par deux ouvertures de passage (76).

7. Turbocompresseur à soupape de décharge selon la revendication 5, **caractérisé en ce qu'**un raccord d'entrée (64) de liquide de refroidissement et un raccord de sortie (66) de liquide de refroidissement sont formés sur le boitier d'actionneur (36) dans une région de logement (56) dudit moteur électrique (54).

8. Turbocompresseur à soupape de décharge selon la revendication 7, **caractérisé en ce qu'**une paroi de séparation (74) est disposée dans la deuxième section (72) du canal de liquide de refroidissement entre le raccord d'entrée (64) de liquide de refroidissement et le raccord de sortie (66) de liquide de refroidissement, la paroi s'étendant dans la direction axiale de l'arbre d'entrainement (52) dudit moteur électrique.

9. Turbocompresseur à soupape de décharge selon l'une quelconque des revendications précédentes, **caractérisé en ce que** des composants électroniques (84, 87, 88, 90) de la soupape de décharge (15) sont disposés sur le couvercle (78) de l'actionneur.

10. Turbocompresseur à soupape de décharge selon la revendication 9, **caractérisé en ce qu'**une fiche (88) et un capteur sans contact (84) sont montés sur le couvercle (78) de l'actionneur pour signaler une position, le capteur (84) correspondant avec un aimant (86) lié à l'arbre de sortie (32).

11. Turbocompresseur à soupape de décharge selon l'une quelconque des revendications précédentes, **caractérisé en ce que** les bornes (90) pour le moteur électrique (54) sont formées sur le couvercle (78) de l'actionneur.

12. Turbocompresseur à soupape de décharge selon l'une quelconque des revendications précédentes, **caractérisé en ce que** l'arbre de sortie (32) est relié à un arbre de clapet (30) par un accouplement Oldham (38), le corps de réglage (26) étant monté sur ledit arbre.
